# EUROPEAN PATENT APPLICATION

(11) **EP 2 604 343 A1**
(43) Date of publication of application: **19.06.2013**
(21) Application number: 12197241.8
(22) Date of filing: 14.12.2012
(51) Int. Cl.: B01L 3/00, F16K 99/00

(54) **Microfluidic device and method of manufacturing the same**

(30) Priority: 15.12.2011 KR 20110135774; 12.04.2012 KR 20120037699
(71) Applicant: Samsung Electronics Co., Ltd, Gyeonggi-do 443-742 (KR)
(72) Inventor: Shim, Joon-sub, Gyeonggi-do (KR); Park, Chin-sung, Gyeonggi-do (KR); Jung, Won-jong, Gyeonggi-do (KR); Kim, Joon-ho, Gyeonggi-do (KR); Namkoong, Kak, Gyeonggi-do (KR)
(74) Representative: Grünecker, Kinkeldey, Stockmair & Schwanhäusser

(57) **Abstract**

Embodiments of the disclosure describe a microfluidic device and a method of manufacturing the same. An embodiment of the microfluidic device includes a first substrate in which a micro-flow path and a valve seat protruding toward the micro-flow path are formed; a second substrate disposed to face the first substrate and in which a cavity corresponding to the valve seat is formed; and a polymer film disposed between the first substrate and the second substrate and comprising a bonding unit bonded to the first and second substrates and a variable unit having a variable shape according to pneumatic pressure of the cavity, wherein the variable unit has a curvature and is spaced apart from the valve seat when pneumatic pressure is not provided to the variable unit.

## Description

### BACKGROUND

### 2. Description of the Related Art

A sample, e.g., a biological sample, related to clinic or environment may be analyzed by a series of biochemical, chemical, and mechanical processes. Recently, technical development for biological diagnosis or monitoring of a sample has attracted wide attention. A method for molecular diagnosis based on nucleic acid exhibits superior accuracy and sensitivity compared with other techniques, and thus, is widely used for infectious disease or cancer diagnosis, pharmacogenomics, and new drug development.

Microfluidic devices are widely used to conveniently and accurately analyze a sample according to a variety of purposes. In such microfluidic devices, since a plurality of members such as a sample input hole, a sample output hole, a micro-flow path, and a reaction chamber are formed in a thin substrate, a variety of tests may be conveniently performed with respect to a single sample. Thus, microfluidic devices are used as a platform for various types of sensors, for amplification and diagnosis of a biological sample, and for new drug development.

A conventional microfluidic device may include a micro-valve and a pump so that a sample and a reagent may be accurately provided at desired positions in the microfluidic device. In conventional devices, the micro-valve is considered "normally closed", meaning that the valve is in a closed state when at rest and in an open state when actuated by the pump. The micro-valve is disposed in a micro-flow path of the microfluidic device, and, for example, may be formed by providing a thin polymer film and a valve seat in the micro-flow path of the microfluidic device. The micro-valve is closed when the polymer film and the valve seat contact each other, and thus the sample does not flow through the micro-flow path. The micro-valve is opened when the polymer film and the valve seat do not contact each other, and thus the sample flows through the micro-flow path.

Since the polymer film and the valve seat regularly contact each otherespecially in normally closed micro-valves -- the polymer film may become fixed to the valve seat over time. In this case, the micro-valve may not function properly.

Another drawback of conventional microfluidic devices is that many are fabricated using a glass substrate. It is difficult to bond a polymer film to the glass substrate, which decreases the reliability of, e.g., a micro-valve formed of a polymer film. Additionally, glass substrates are manufactured in a micro-structure using a semiconductor process, which increases manufacturing cost.

### SUMMARY

Provided are microfluidic devices capable of preventing a polymer film and a valve seat from being fixed to each other and methods of manufacturing the microfluidic devices.

Provided are microfluidic devices having no bonding agent and methods of manufacturing the microfluidic devices.

Provided are microfluidic devices which are easy to manufacture and methods of manufacturing the microfluidic devices.

Additional aspects will be set forth in part in the description which follows and, in part, will be apparent from the description, or may be learned by practice of the presented embodiments.

According to an aspect of the present invention, a microfluidic device includes a microfluidic device including: a first substrate in which a micro-flow path and a valve seat protruding toward (e.g., into) the micro-flow path are formed; a second substrate disposed to face the first substrate and in which a cavity corresponding to the valve seat is formed; and a polymer film disposed between the first substrate and the second substrate and comprising a bonding unit bonded to the first and second substrates and a variable unit having a variable shape according to pneumatic pressure provided to the cavity, wherein the variable unit has a curvature and is spaced apart from the valve seat when the pneumatic pressure is not provided to the variable unit. Accordingly, the polymer film may not become fixed to the valve seat over time, thus ensuring that the micro-valve may function properly.

The variable unit may be in a concave shape with respect to the valve seat. Accordingly, when the pneumatic pressure is not provided to the cavity, a top surface of the valve seat does not contact the polymer film, and a space between the valve seat and the polymer film exists. Therefore, even if the microfluidic device is not used for a long time, the polymer film does not become fixed to the valve seat.

The variable unit may contact the valve seat when the pneumatic pressure is provided to the variable unit. Accordingly, the micro-flow path may be blocked. Thus, if for example a fluid is inside the micro-flow path, that fluid may blocked and ceases to flow.

The first substrate and the second substrate may be formed of polymer materials.

The polymer materials may include at least one selected from the group consisting of polypropylene (PP), polyethylene (PE), high density polyethylene (HDPE), thermoplastic elastomer (TPE), elastic polymer, fluoropolymer, poly methyl methacrylate (PMMA), polystyrene (PS), polycarbonate (PC), cyclic olefin copolymer (COC), polyethylene terephthalate (PET), polyvinyl chloride (PVC), acrylonitrile butadiene styrene (ABS), and polyurethane (PUR).

The first substrate, the second substrate, and the polymer film may be formed of the same type of polymer materials.

At least one of the first substrate, the second substrate, and the polymer film may be formed of different types of polymer materials. Accordingly, by having one or more of the first substrate, the second substrate and the polymer film formed of polymer materials, it may be sufficiently easy to bond a polymer film to the substrates, such that reliability may be increased. Also, manufacturing costs may be lowered.

At least one of a surface of the first substrate contacting the polymer film, a surface of the second substrate contacting the polymer film, a surface of the polymer film contacting the first substrate, and a surface of the polymer film contacting the second substrate may be surface-processed using at least one of ultraviolet (UV) light, ozone, plasma and corona treatment. Accordingly, a surface energy may increase, and thus the surface-processed first substrate and the polymer film, and the second substrate, and the polymer film may be bonded to each other at a temperature lower than an original glass transition temperature Tg. Thus, different types of polymers having different glass transition temperatures Tg may be bonded to each other at a temperature lower than an original glass transition temperature Tg using the surface-processing method. In addition, if the first substrate, the second substrate, and the polymer film are bonded to each other at a temperature lower than the original glass transition temperature, a thermal modification of the valve seat may be minimized.

According to another aspect of the present invention, a method of manufacturing a microfluidic device includes: a substrate in which a micro-flow path and a valve seat protruding by the micro-flow path are formed; and a polymer film disposed on a surface of the substrate and comprising a bonding unit bonded to the substrate and a variable unit having a variable shape according to pressure, wherein the variable unit has a curvature and is spaced apart from the valve seat when the pressure is not provided to the variable unit. The advantages of this and the following general aspects correspond to the ones for the respective microfluidic device disclosed above.

The substrate may include: a first sub substrate in which a micro-flow path and a first valve seat protruding toward the micro-flow path are formed; a second sub substrate disposed on the first sub substrate and in which a first hole and a second hole are formed so that a second valve seat is disposed in a region corresponding to the first valve seat.

The surface of the substrate may be planar. Thus, a planarized surface of the substrate may minimize a valve breaking pressure necessary for preventing a sample from leaking when the valve is closed.

The variable unit may be in a concave shape with respect to the valve seat.

The variable unit may contact the valve seat when the pressure is provided to the variable unit.

The substrate may be formed of a polymer material.

At least one of a surface of the substrate contacting the polymer film, and a surface of the polymer film contacting the substrate may be surface-processed using at least one of ultraviolet (UV) light, ozone, plasma and corona treatment.

According to another aspect of the present invention, a method of manufacturing a microfluidic device includes preparing a first substrate including a micro-flow path and a valve seat protruding toward the micro-flow path, a second substrate including a cavity corresponding to the valve seat, and a polymer film disposed between the first substrate and the second substrate; and bonding the first substrate, the second substrate, and the polymer film by applying pressure and heat thereto, wherein, in the bonding, a part of the polymer film is modified to have a curvature. The advantages of this and the following general aspects correspond to the ones for the respective microfluidic device disclosed above.

The part of the polymer film may be disposed in the cavity.

The part of the polymer film may be in a concave shape with respect to the valve seat.

The first substrate and the second substrate may be formed of polymer materials.

The method may further include: performing surface-processing on a surface of at least one of the first substrate, the second substrate, and the polymer film using at least one of ultraviolet (UV) light, ozone, plasma and corona treatment.

According to another aspect of the present invention, a method of manufacturing a microfluidic device includes preparing a substrate having a planar surface, a sacrificing substrate including a cavity, and a polymer film disposed between the substrate and the polymer film; and bonding the substrate, the sacrificing substrate, and the polymer film by applying pressure and heat thereto, wherein, in the bonding, a part of the polymer film is modified to have a curvature.

A distance from the valve seat to the curved membrane may be about 10 µm or less.

### BRIEF DESCRIPTION OF THE DRAWINGS

These and/or other aspects will become apparent and more readily appreciated from the following description of the embodiments, taken in conjunction with the accompanying drawings of which:

FIG. 1 schematically illustrates a structure of a microfluidic device according to an embodiment of the present invention;

FIG. 2 is a cross-sectional view schematically illustrating the microfluidic device of FIG. 1 in which micro-valves are disposed in micro-flow paths;

FIG. 3 is an exemplary plan projective view of a micro-flow path and a micro-valve formed in a microfluidic device according to a first embodiment of the present invention;

FIG. 4A is a cross-sectional view taken along line A-A' of a region of the microfluidic device of FIG. 3;

FIG. 4B is a cross-sectional view taken along line B-B' of the region of the microfluidic device of FIG. 3;

FIGS. 5A through 5C are cross-sectional views of a micro-valve that is opened and closed;

FIG. 6A is an exemplary plan projective view of a micro-flow path and a micro-valve formed in a microfluidic device according to a second embodiment of the present invention;

FIG. 6B is a cross-sectional view of a micro-valve according to another embodiment of the present invention;

FIG. 6C is a cross-sectional view of the micro-valve of FIG. 6B that is closed;

FIG. 7A is an exemplary plan projective view of a region of a micro-flow path formed in a microfluidic device according to a third embodiment of the present invention;

FIG. 7B is a cross-sectional view taken along line C-C' of the region of the micro-flow path of FIG. 7A;

FIG. 7C is a cross-sectional view taken along line D-D' of the region of the micro-flow path of FIG. 7A;

FIGS. 8A through 8C are cross-sectional views illustrating a method of manufacturing a microfluidic device according to a first embodiment of the present invention;

FIGS. 9A through 9C are cross-sectional views illustrating a method of manufacturing a microfluidic device according to a second embodiment of the present invention;

FIGS. 10A through 10C are cross-sectional views illustrating a method of manufacturing a microfluidic device according to a third embodiment of the present invention;

FIGS. 11A through 11C are cross-sectional views illustrating a method of simultaneously manufacturing a micro-valve and a micro-chamber of a microfluidic device according to an embodiment of the present invention; and

FIGS. 12A and 12B are graphs of an experiment result indicating bonding intensity when Polypropylene (PP) and Poly Methyl Methacrylate (PMMA) that are surface-processed using ultraviolet (UV) light are bonded to each other in a thermal fusing manner according to an embodiment of the present invention.

### DETAILED DESCRIPTION

Reference will now be made in detail to embodiments, examples of which are illustrated in the accompanying drawings, wherein like reference numerals refer to the like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," when preceding a list of elements, modify the entire list of elements and do not modify the individual elements of the list.

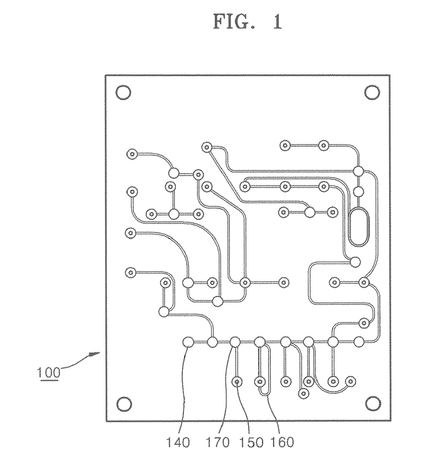

FIG. 1 schematically illustrates a structure of a microfluidic device 100 according to an embodiment of the present invention. Referring to FIG. 1, the microfluidic device 100 may include, for example, in a thin and transparent substrate, a plurality of holes 150 for inputting/outputting a sample or air, a plurality of reaction chambers 140 in which chemical/biological reaction of the sample occurs, a plurality of micro-flow paths 160 along which the sample flows, and a plurality of micro-valves 170 for accurately controlling the flow of the sample toward a desired position. For convenience, one chamber 140, one hole 150, one micro-flow path 160, and one micro-valve 170 are illustrated in FIG. 1, however the microfluidic device 100 is not limited thereto. Additionally, positions of the chamber 140, the hole 150, the micro-flow path 160, and the micro-valve 170 of the microfluidic device 100 in FIG. 1 are merely provided for example, and numbers and positions thereof may be determined according to the use of the microfluidic device 100 and a designer's preferences.

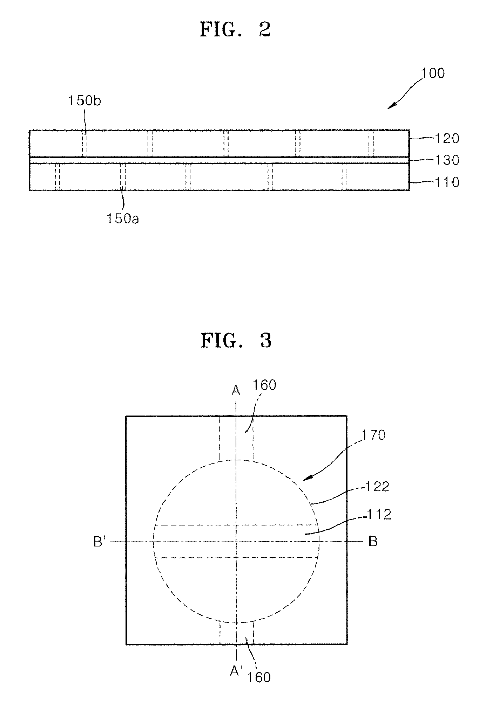

The micro-valves 170 may be formed in the micro-flow paths 160 and block or allow the flow of the sample or air in the micro-flow paths 160. The micro-flow paths 160 may be formed in concave groove shapes in a first substrate 110. The micro-valves 170 may be formed of elastic thin films. FIG. 2 is a cross-sectional view schematically illustrating the microfluidic device 100 of FIG. 1 in which the micro-valves 170 are disposed in the micro-flow paths 160. Referring to FIG. 2, the microfluidic device 100 may include the first substrate 110, a second substrate 120, and a thin polymer film 130 disposed between the first substrate 110 and the second substrate 120. A plurality of first holes 150a may be disposed in the first substrate 110. A plurality of second holes 150b may be disposed in the second substrate 120. The first holes 150a may be fluidic holes for providing fluid like a sample. The second holes 150b may be pneumatic holes for providing pneumatic pressure to push the polymer film 130. Although the first holes 150a and the second holes 150b only are shown in FIG. 2, the chambers 140, the micro-flow paths 160, and the micro-valves 170 may be separately formed in opposing surfaces of the second substrate 120 and the first substrate 110.

The first substrate 110, the second substrate 120, and the thin polymer film 130 may be formed of polymer materials. For example, the first substrate 110, the second substrate 120, and the thin polymer film 130 may be formed of polypropylene (PP), polyethylene (PE), high density polyethylene (HDPE), thermoplastic elastomer (TPE), elastic polymer, fluoropolymer, poly methyl methacrylate (PMMA), polystyrene (PS), polycarbonate (PC), cyclic olefin copolymer (COC), polyethylene terephthalate (PET), polyvinyl chloride (PVC), acrylonitrile butadiene styrene (ABS), and polyurethane (PUR). The first substrate 110, the second substrate 120, and the thin polymer film 130 may be formed of the same type of polymer material or may be formed of different types of polymer materials. For example, the second substrate 120 and the thin polymer film 130 may be formed of the same type of polymer material, and the first substrate 110 may be formed of a different type of polymer material from the polymer material of the second substrate 120 and the thin polymer film 130. At least one of a surface of the first substrate 110 contacting the polymer film 130, a surface of the second substrate 120 contacting the polymer film 130, a surface of the polymer film 130 contacting the first substrate 110, and a surface of the polymer film 130 contacting the second substrate 120 may be surface-processed using at least one of ultraviolet (UV) light, ozone, plasma, and corona treatment.

FIG. 3 is an example plan projective view of the micro-flow path 160 and the micro-valve 170 formed in the microfluidic device 100 according to a first embodiment of the present invention. The micro-flow path 160 and the micro-valve 170 are indicated in hidden lines. Referring to FIG. 3, a valve seat 112 is formed across the micro-flow path 160. A width of the micro-flow path 160 may be greater in a portion where the valve seat 112 is formed than other portions thereof to facilitate an operation of the micro-valve 170. For example, the micro-flow path 160 and the valve seat 112 may be formed in the first substrate 110. The micro-flow path 160 may be formed in a groove shape spaced by the valve seat 112 in the first substrate 110. A top surface of the valve seat 112 may be planarized in order to minimize a valve breaking pressure necessary for preventing a sample from leaking when the micro-valve 170 is closed.

The microfluidic device 100 includes the second substrate 120 spaced from the first substrate 110. A cavity 122 may be formed in a region of the second substrate 120 corresponding to the valve seat 112. Although not expressly shown in FIG. 3, the polymer film 130 is disposed below the cavity 122. The cavity 122 is a place where pneumatic pressure is provided to push the polymer film 130 toward the valve seat 112 with sufficient force to close the micro-valve 170.

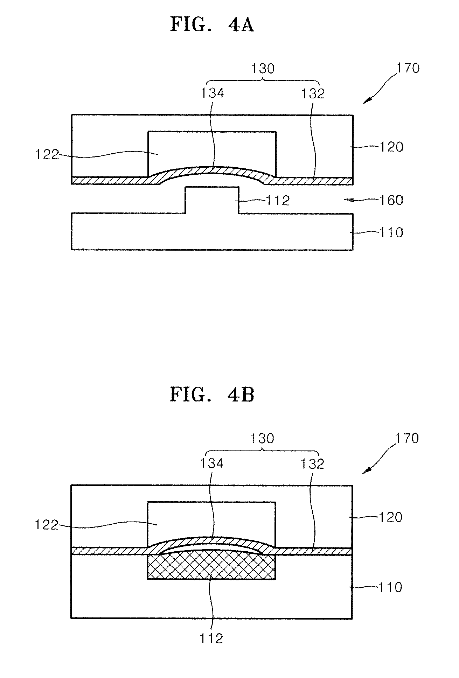

The structure of the micro-fluidic device 100 of FIG. 3 is shown in more detail in the cross-sectional views of FIGS. 4A and 4B. FIG. 4A is a cross-sectional view taken along line A-A' of a region of the microfluidic device 100 of FIG. 3. FIG. 4B is a cross-sectional view taken along line B-B' of the region of the microfluidic device 100 of FIG. 3.

Referring to FIG. 4A, the micro-flow path 160 and the valve seat 112 protruding toward the micro-flow path 160 are formed in the first substrate 110. The micro-flow path 160 may be formed in a concave groove shape in the first substrate 110. The cavity 122 is formed in the second substrate 120 that faces the first substrate 110 and corresponds to the valve seat 112 by etching an inner surface of the second substrate 120. Although not shown, the micro-flow path 160 formed in the first substrate 110 may be connected to the first holes 150a formed in the first substrate 110 so that a sample may be input to and output from the micro-flow path 160. The cavity 122 formed in the second substrate 120 may be connected to the second holes 150b formed in the second substrate 120 so that air for controlling the polymer film 130 may be input to and output from the cavity 122.

The polymer film 130 is disposed between the first substrate 110 and the second substrate 120, and separates the cavity 122 and the valve seat 112 from each other. For example, in a region of the micro-valve 170 of FIG. 4A, the polymer film 130 may include a bonding unit 132 bonded to the inner surface of the second substrate 120 and a variable unit 134 for separating the cavity 122 and the valve seat 112 from each other and having a variable shape. The bonding unit and variable unit may be different regions of a polymer film. Considering the whole structure of the microfluidic device 100, the polymer film 130 may be bonded to opposing two inner surfaces of the first substrate 110 and the second substrate 120 as shown in FIG. 2.

The variable unit 134 of the polymer film 130 has a curvature spaced apart from the valve seat 112 when pneumatic pressure is not provided to the cavity 122. For example, the variable unit 134 may be in a concave shape with respect to the valve seat 112. Thus, when the pneumatic pressure is not provided to the cavity 122, a top surface of the valve seat 112 does not contact the polymer film 130, and a space between the valve seat 112 and the polymer film 130 exists. Therefore, even if the microfluidic device 100 is not used for a long time, the polymer film 130 does not become fixed to the valve seat 112.

Referring to FIG. 4B, the valve seat 112 is formed in the first substrate 110. The cavity 122 is formed in the second substrate 120 corresponding to the valve seat 112. The bonding unit 132 of the polymer film 130 is bonded to the first substrate 110 and the second substrate 120. The variable unit 134 of the polymer film 130 is in a convex shape protruding toward the cavity 122 (e.g., convex relative to the valve seat 112), and thus a distance between the variable unit 134 and the valve seat 112 increases toward a center portion of the variable unit 134. In some embodiments, the distance from the valve seat to the convex curvature of the polymer film is about 10 µm or less, e.g., as measured at the apex of the curvature or at the center of the curvature, the center of the valve seat, or the greatest distance between the valve seat and the polymer film.

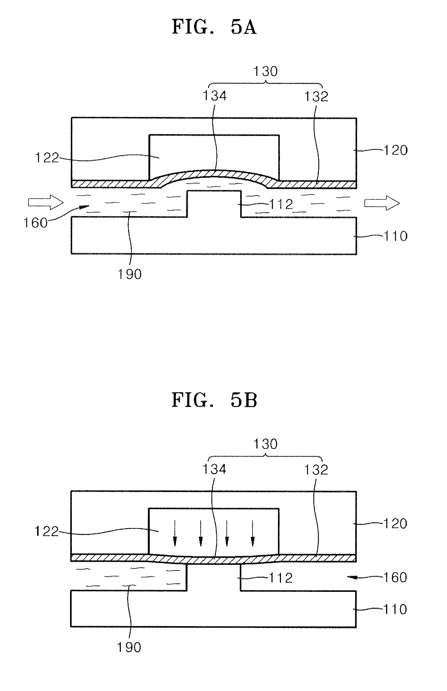

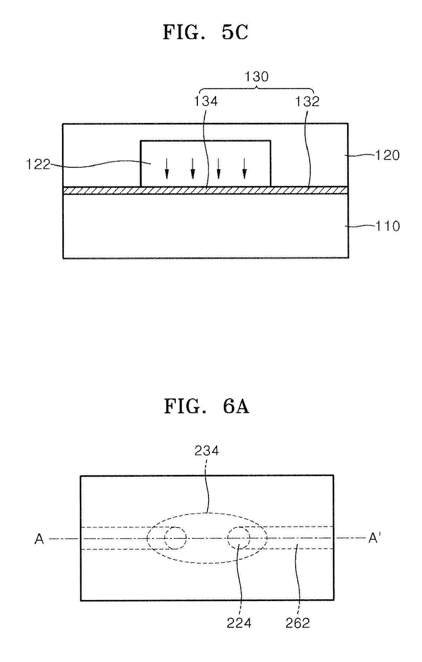

FIGS. 5A through 5C are cross-sectional views of the micro-valve 170 that is opened and closed. For example, FIG. 5A is a schematic cross-sectional view of the micro-valve 170 that is opened in the same direction as shown in FIG. 4A. FIG. 5B is a schematic cross-sectional view of the micro-valve 170 that is closed in the same direction as shown in FIG. 4A. FIG. 5C is a schematic cross-sectional view of the micro-valve 170 that is closed in the same direction as shown in FIG. 4B.

Referring to FIG. 5A, since the polymer film 130 has a concave curvature with respect to the valve seat 112, a top surface of the valve seat 112 does not usually contact the polymer film 130. In this regard, the micro-valve 170 is a normally open type in which the micro-valve 170 is usually in an open state. Thus, for example, fluid 190 provided to the micro-flow path 160 through the first holes 150a may flow through the micro-valve 170.

When the micro-valve 170 is to be closed, as shown in FIGS. 5B and 5C, pneumatic pressure may be provided to the cavity 122 through the second holes 150b. Then, the polymer film 130 below the cavity 122 is pushed toward the valve seat 112 by the pneumatic pressure. If a sufficient intensity of pneumatic pressure is provided, the polymer film 130 is tightly adhered to the valve seat 112 so that a gap between the polymer film 130 and the valve seat 112 is completely filled. Then, fluid 190 inside the micro-flow path 160 is blocked by the micro-valve 170 and ceases to flow. In this regard, the intensity of pneumatic pressure required to close the micro-valve 170 may be determined in terms of various factors, such as a material of the polymer film 130, a distance between the variable unit 134 and the valve seat 112, the width and height of the micro-flow path 160, and surface conditions and geometrical shapes of the valve seat 112 and the polymer film 130. The top surface of the valve seat 112 may be planarized in order to minimize the intensity of pneumatic pressure required to close the micro-valve 170 and block fluid flow. Meanwhile, as described with reference to FIG. 4B, the variable unit 134 has a concave shape with respect to the valve seat 112 in the cross-sectional view taken along the line B-B'. Thus, if a sufficient intensity of pneumatic pressure is provided to the cavity 122, as shown in FIG. 5C, a bottom surface of the variable unit 134 and the valve seat 112 may be tightly adhered to each other.

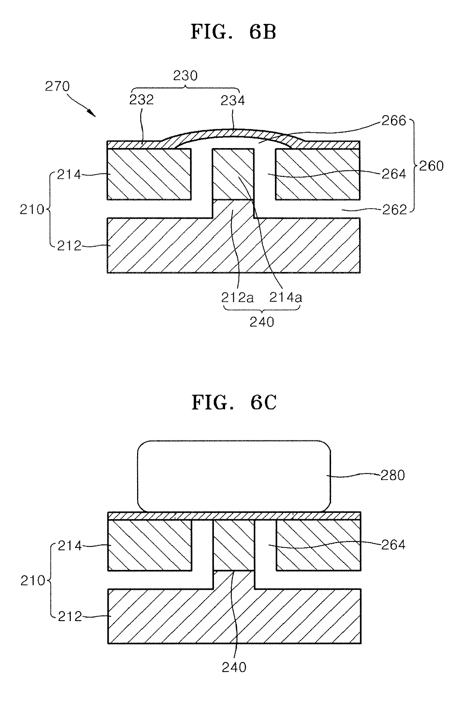

The micro-valve described above is opened and closed by pneumatic pressure. However, the micro-valve may be opened and closed by a rubber structure. FIG. 6A is an example plan projective view of a micro-flow path 260 and a micro-valve 270 formed in a microfluidic device according to a second embodiment of the present invention. The micro-flow path 260 and the micro-valve 270 are indicated in hidden lines. FIG. 6B is a cross-sectional view taken along line A-A' of a region of the microfluidic device of FIG. 6A. FIG. 6C is a cross-sectional view of the micro-valve 270 of FIG. 6B that is closed.

The micro-valve 270 may include a third substrate 210 in which the micro-flow path 260 and a valve seat 240 protruding toward the micro-flow path 260 are formed, and a polymer film 230 disposed on the third substrate 210 and opening and closing the micro-flow path 260. The micro-flow path 260 may include a first sub micro-flow path 262 spaced apart from the valve seat 240, a second sub micro-flow path 264 connected to the first sub micro-flow path 262 and contacting a side surface of the valve seat 240, and a third sub micro-flow path 266 connected to the second sub micro-flow path 264 and disposed in a top portion of the valve seat 240. A top surface of the valve seat 240 may be planarized to minimize the valve-closing pressure necessary for preventing a sample from leaking when the micro-valve 270 is closed.

The third substrate 210 may be formed by coupling a first sub substrate 212 and a second sub substrate 214. The valve seat 240 may be formed by coupling a first sub valve seat 212a formed by the first sub substrate 212 and a second sub valve seat 214a formed by the second sub substrate 214. For example, the micro-flow path 260 may be formed in an inner surface of the first sub substrate 212 in a concave groove shape spaced by the first sub valve seat 212a. The second sub valve seat 214a is formed by third and fourth holes 262 and 264 spaced apart from each other by the second sub substrate 214. The third and fourth holes 262 and 264 are parts of the micro-flow path 260 through which the sample flows. In this regard, the first and second sub substrates 212 and 214 may be formed of the same type of polymer material.

The polymer film 230 is bonded to a top surface of the third substrate 210 and controls the flow of fluid. For example, the polymer film 230 may include a bonding unit 232 bonded to the top surface of the third substrate 210 and a variable unit 234 contactable to the valve seat 240 and having a variable shape. The variable unit 234 of the polymer film 230 has a curvature and is spaced apart from the valve seat 240. For example, the variable unit 234 may be in a concave shape with respect to the valve seat 240.

The third substrate 210 and the polymer film 230 may be formed of polymer materials. For example, the third substrate 210 and the polymer film 230 may be formed of polypropylene (PP), polyethylene (PE), high density polyethylene (HDPE), thermoplastic elastomer (TPE), elastic polymer, fluoropolymer, poly methyl methacrylate (PMMA), polystyrene (PS), polycarbonate (PC), cyclic olefin copolymer (COC), polyethylene terephthalate (PET), polyvinyl chloride (PVC), acrylonitrile butadiene styrene (ABS), and polyurethane (PUR). The third substrate 210 and the polymer film 230 may be formed of the same type of polymer material or may be formed of different types of polymer materials. At least one of a surface of the third substrate 210 contacting the polymer film 230 and a surface of the polymer film 230 contacting the third substrate 210 may be surface-processed using at least one of ultraviolet (UV) light, ozone, plasma, and corona treatment.

The polymer film 230 is in a concave shape with respect to the valve seat 240, so that the top surface of the valve seat 240 does not contact the polymer film 230, and a space between the valve seat 240 and the polymer film 230 exists. Therefore, even if the microfluidic device is unused for a long time, the polymer film 230 does not become fixed to the valve seat 240. Thus, since the micro-valve 270 is usually in an open state, for example, fluid provided to the micro-flow path 260 may flow through the micro-valve 270.

When the micro-valve 270 is to be closed, pressure is applied to the polymer film 230 toward the valve seat 240 (e.g., mechanically, such as by using a rubber 280. Then, the curvature of the variable unit 234 of the polymer film 230 is changed toward the valve seat 240 according to the pressure. If a sufficient intensity of pressure is provided, the variable unit 234 is tightly adhered to the valve seat 240 so that a gap between the variable unit 234 and the valve seat 240 is completely filled. Then, fluid inside the micro-flow path 260 is blocked by the micro-valve 270 and ceases to flow. In this regard, the intensity of pressure sufficient to close the valve may determined by various factors, such as a material of the polymer film 230, a distance between the variable unit 234 and the valve seat 240, the width and height of the micro-flow path 260, and surface conditions and geometrical shapes of the valve seat 240 and the polymer film 230.

The normally-open state of the micro-valves 170 and 270 provide several advantages over conventional, normally-closed micro-valves. First, in normally-closed micro-valves manufactured with similar materials, it is often necessary to coat the surface of a valve seat so that the valve seat does not bond to the polymer film. This results in additional processing steps, complicating the process of manufacturing the microfluidic device. Once the microfluidic device is manufactured, if a polymer film and a valve seat regularly contact each another (as is the case in normally-closed micro-valves), a chemical or physical reaction may bond the polymer film to the valve seat. Thus, when the normally-closed microfluidic device is unused for a long time, it may be necessary to separate the polymer film from the valve seat before the microfluidic device may be used -- complicating the process of preparing the microfluidic device for use. On the other hand, in the microfluidic device described above, since the polymer films 130 and 230 and the valve seats 112 and 240 do not usually contact each other (i.e., are normally-open), such preparation before use is unnecessary. Thus, the flow of fluid inside the microfluidic device may be more efficiently and reliably controlled. Of course, the valves described herein can, optionally, be used in conjunction with measures taken to prevent bonding of the valves to the valve seats, such as the use of coatings.

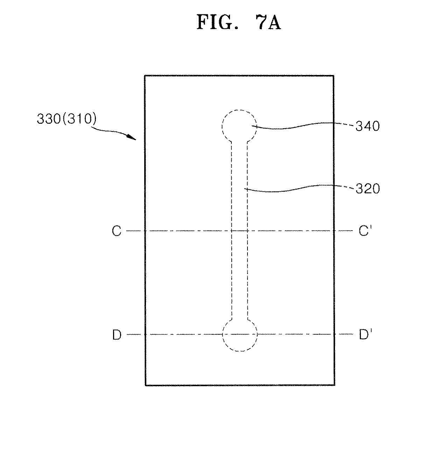

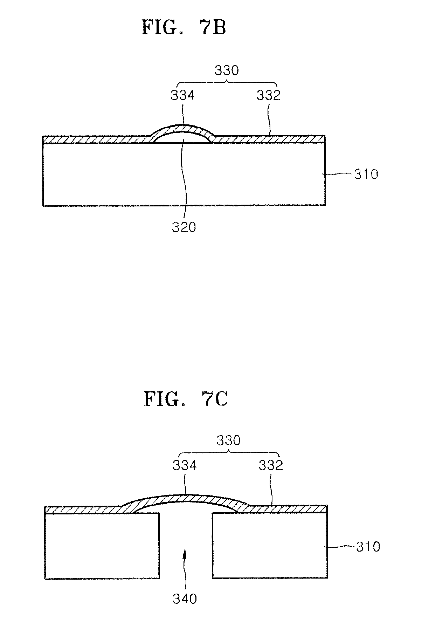

The polymer films 130 and 230 described above may be applied to the micro-valve 170 as well as the micro-flow path 160. FIG. 7A is an example plan projective view of a region of a micro-flow path 320 formed in a microfluidic device according to a third embodiment of the present invention. The micro-flow path 320 is indicated in a hidden line. FIG. 7B is a cross-sectional view taken along line C-C' of the region of the micro-flow path 320 of FIG. 7A. FIG. 7C is a cross-sectional view taken along line D-D' of the region of the micro-flow path 320 of FIG. 7A.

Referring to FIGS. 7A through 7C, the micro-flow path 320 may include a fourth substrate 310 and a polymer film 330 disposed on the fourth substrate 310 and forming the micro-flow path 320. A third hole 340 for inputting and outputting a sample may be formed in the fourth substrate 310. A concave groove may be formed toward the inside of the fourth substrate 310. A surface of the fourth substrate 310 may be planar.

The polymer film 330 is disposed on the fourth substrate 310 and forms the micro-flow path 320. For example, as shown in FIG. 7B, the polymer film 330 may include a bonding unit 332 bonded to a top surface of the fourth substrate 310 and a flow path unit 334 spaced apart from the fourth substrate 310 and forming the micro-flow path 320. The flow path unit 334 of the polymer film 330 may be in a concave shape with respect to the fourth substrate 310. A distance from a center of the flow path unit 334 to the fourth substrate 310 may be about 10 µm or less.

The polymer film 330 is in a concave shape with respect to the fourth substrate 310, and thus the fourth substrate 310 may not be etched to form a groove in the fourth substrate 310. The micro-flow path 320 is formed by a curvature of the polymer film 330 rather than by etching of the fourth substrate 310, thereby forming a smaller micro-flow path.

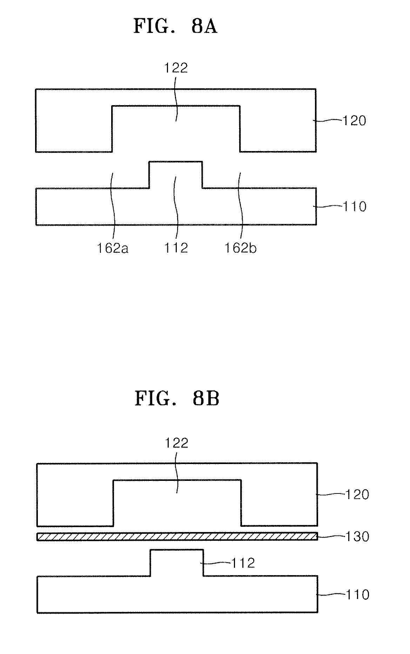

A method of manufacturing the above-described microfluidic devices will now be described. FIGS. 8A through 8C are cross-sectional views illustrating a method of manufacturing a microfluidic device according to a first embodiment of the present invention.

Referring to FIG. 8A, the first substrate 110 including micro-flow paths 162a and 162b and the valve seat 112 protruding toward the micro-flow paths 162a and 162b is prepared. The first substrate 110 may be formed of a polymer material but the present invention is not limited thereto, and the first substrate 110 may be formed of a variety of materials. Meanwhile, a process for planarizing a top surface of the valve seat 112 may be performed in order to tightly adhere the valve seat 112 to the polymer film 130. For example, the top surface of the valve seat 112 is planarized by contacting the top surface of the valve seat 112 and a planar substrate (not shown) not bonded to the material of the first substrate 110, and applying heat thereto. Next, the second substrate 120 including the cavity 122 is prepared. The second substrate 120 may be also formed of the polymer material like the first substrate 110.

Referring to FIG. 8B, the polymer film 130 is disposed between the first substrate 110 and the second substrate 120. In this regard, the polymer film 130 may be formed of a flexible polymer material. Although the polymer film 130 is disposed between the first substrate 110 and the second substrate 120 after the first substrate 110 and the second substrate 120 are prepared in the present embodiment, the present invention is not limited thereto. The first substrate 110, the polymer film 130, and the second substrate 120 may be prepared in any order.

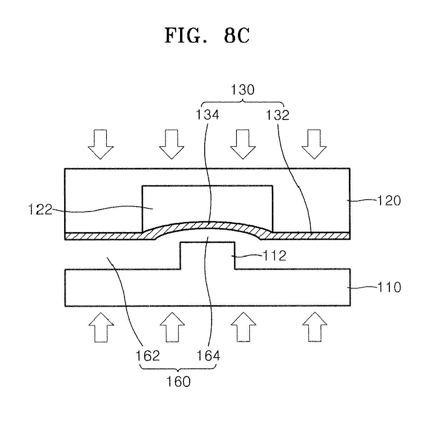

Next, referring to FIG. 8C, the first substrate 110, the second substrate 120, and the polymer film 130 are bonded to one another by applying heat and pressure thereto. For example, if the first substrate 110, the second substrate 120, and the polymer film 130 are formed of the same polymer material, the first substrate 110, the second substrate 120, and the polymer film 130 are bonded to each other according to polymer cross-linking by increasing the temperature to a glass transition temperature Tg of polymer.

However, if the first and second substrates 110 and 120, and the polymer film 130 are formed of different polymer materials, the glass transition temperature Tg between polymers differ. In this case, before the first substrate 110, the second substrate 120, and the polymer film 130 are bonded to each other, the surfaces thereof may be surface-processed using at least one of ultraviolet (UV) light, ozone, plasma, and corona treatment. The surface-processed first substrate 110, the second substrate 120, and the polymer film 130 are bonded to each other. For example, at least one of a surface of the first substrate 110 contacting the polymer film 130, a surface of the second substrate 120 contacting the polymer film 130, a surface of the polymer film 130 contacting the first substrate 110, and a surface of the polymer film 130 contacting the second substrate 120 may be surface-processed using at least one of ultraviolet (UV) light, ozone, plasma, and corona treatment. In this case, a surface energy increases, and thus the surface-processed first substrate 110 and the polymer film 130, and the second substrate 120, and the polymer film 130 are bonded to each other at a temperature lower than an original glass transition temperature Tg. Thus, different types of polymers having different glass transition temperatures Tg may be bonded to each other at a temperature lower than an original glass transition temperature Tg using the surface-processing method.

In addition, although the first substrate 110, the second substrate 120, and the polymer film 130 are formed of the same polymer material, the first substrate 110, the second substrate 120, and the polymer film 130 may be surface-processed using at least one of ultraviolet (UV) light, ozone, plasma, and corona treatment. Such surface-processing may include exposing at least one of surfaces of the first substrate 110, the second substrate 120, and the polymer film 130 to plasma, ultraviolet rays, activated oxygen, and/or ultraviolet-ozone (UVO). Accordingly, a material of the exposed surface may have a low glass transition temperature Tg. In this case, the first substrate 110, the second substrate 120, and the polymer film 130 may be bonded to each other at a temperature lower than an original glass transition temperature Tg while their modifications may be minimized.

Meanwhile, during a process of bonding the first substrate 110, the second substrate 120, and the polymer film 130 to each other, a part of the polymer film 130 disposed in the cavity 122 is modified to have a curvature curved toward the cavity 122 by applying pressure (e.g., pneumatic pressure). The pressure can be relatively small amount of pressure. In addition, if the first substrate 110, the second substrate 120, and the polymer film 130 are bonded to each other at a temperature lower than the original glass transition temperature, a thermal modification of the valve seat 112 is minimized. Accordingly, the polymer film 130 is bonded in a concave shape with respect to the valve seat 112 and thus is spaced apart from the valve seat 112, and the micro-flow path 164 is formed between the valve seat 112 and the polymer film 130. As described above, the microfluidic device is manufactured by bonding the first substrate 110, the second substrate 120, and the polymer film 130 to each other using heat and pressure, and without using a bonding agent. Thus, the microfluidic device may have a wide range of applications, including in biochemical or medical equipment that use a reagent sensitive to bonding agents.

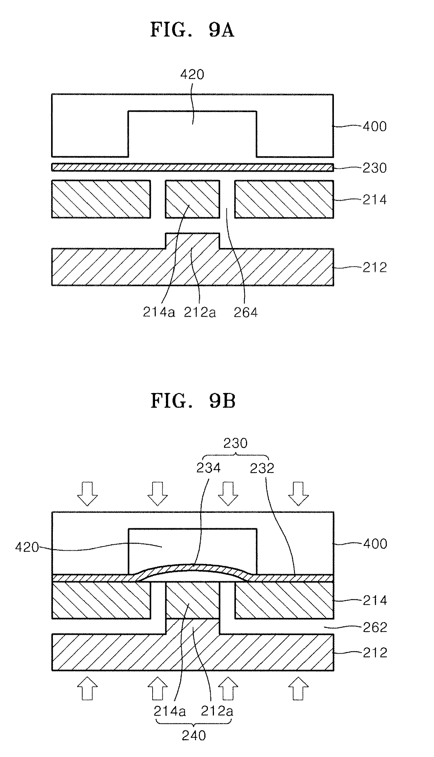

FIGS. 9A through 9C are cross-sectional views illustrating a method of manufacturing a microfluidic device according to a second embodiment of the present invention.

Referring to FIG. 9A, the first sub substrate 212 including a first sub micro-flow path 262 and the first sub valve seat 212a protruding from the first sub micro-flow path 262 is prepared, the second sub substrate 214 including a plurality of holes 224a and 224b spaced apart from each other by the second sub valve seat 214a is prepared on the first sub substrate 212, and the polymer film 230 is prepared on the second sub substrate 214. A first sacrificing substrate 400 including a cavity 420 is prepared on the polymer film 230. The first and second sub substrates 212 and 214 may be formed of the same type of polymer material. Meanwhile, a process of planarizing a top surface of the first sub valve seat 212a may be performed in order to precisely adhere the first sub valve seat 212a to the second sub valve seat 214a. For example, the top surface of the second sub valve seat 214a is planarized by contacting the top surface of the second sub valve seat 214a a planar substrate (not shown) that is not bonded to a material of the third substrate 210, and applying heat and pressure thereto.

The polymer film 230 may be a polymer material that is the same as or is different from a material of the second sub substrate 214. Alternatively, at least one of the second sub substrate 214 and the polymer film 230 may be surface-processed using at least one of ultraviolet (UV) light, ozone, plasma, and corona treatment. For example, a surface of the second sub substrate 214 contacting the polymer film 230 and a surface of the polymer film 230 contacting the second sub substrate 214 may be surface-processed.

The first sacrificing substrate 400 may be formed of glass that is not bonded to polymer. Alternatively, the first sacrificing substrate may be formed of a polymer material. If the first sacrificing substrate 400 is formed of the polymer material, the first sacrificing substrate 400 and the polymer film 230 may be formed of different polymer materials. For example, the first sacrificing substrate 400 may be formed of a polymer material having a glass transition temperature higher than that of the polymer film 230.

As shown in FIG. 9B, pressure is applied to the first sacrificing substrate 400 to which heat is applied toward the first sub substrate 212. That is, the first and second sub substrates 212 and 214 and the polymer film 230 are thermally fused. For example, if the first and second sub substrates 212 and 214 and the polymer film 230 are formed of the same polymer material, the first and second sub substrates 212 and 214 and the polymer film 230 are bonded to each other according to polymer cross-linking by increasing a temperature to the glass transition temperature Tg.

Further, if the second sub substrate 214 and the polymer film 230 are formed of different polymer materials, surfaces of the second sub substrate 214 and the polymer film 230 may be surface-processed using at least one of ultraviolet (UV) light, ozone, plasma, and corona treatment before the second sub substrate 214 and the polymer film 230 are bonded to each other. Then, the surface-processed second sub substrate 214 and polymer film 230 are bonded to each other. For example, a surface of the second sub substrate 214 contacting the polymer film 230 and a surface of the polymer film 230 contacting the second sub substrate 214 may be surface-processed. In this case, a surface energy increases, and thus the surface-processed second sub substrate 214 and the polymer film 230 are bonded to each other at a temperature lower than the glass transition temperature Tg.

In addition, although the first and second sub substrates 212 and 214 and the polymer film 230 are formed of the same polymer material, the first and second sub substrates 212 and 214 and the polymer film 230 may be surface-processed. In this case, the first and second sub substrates 212 and 214 and the polymer film 230 are bonded to each other at a temperature lower than the glass transition temperature Tg while their modifications may be minimized.

Meanwhile, during a process of bonding the second sub substrate 214 and the polymer film 230 each other, a part of the polymer film 230 disposed in the cavity 420 of the first sacrificing substrate 400 is modified to have a curvature curved toward the cavity 420 by applying pressure (e.g., pneumatic pressure). A relatively small amount of pressure can be used. Accordingly, the polymer film 230 is bonded in a concave shape with respect to the valve seat 240 in the cavity 420 and thus the polymer film 230 and the third substrate 210 (see FIG. 6B) integrally form the third sub micro-flow path 266. The third sub micro-flow path 266 is formed by bonding the third substrate 210 and the polymer film 230, thereby forming a smaller fluid flow path than a fluid flow path formed by forming a groove in the third substrate 210.

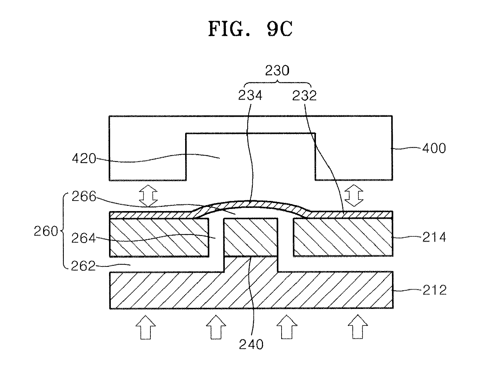

Further, the first sacrificing substrate 400 is formed of a material that is not bonded to polymer or is formed of a polymer material having a higher glass transition temperature than that of the polymer film 230, and thus the polymer film 230 and the first sacrificing substrate 400 are not bonded to each other. Thus, as shown in FIG. 9C, the first sacrificing substrate 400 is removed from the polymer film 230.

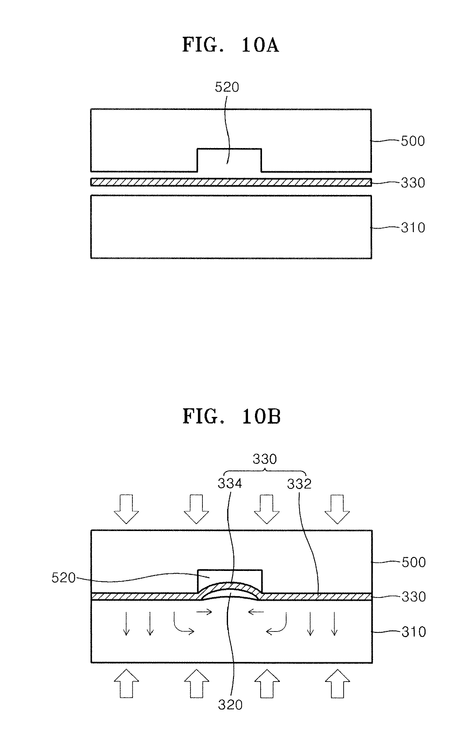

FIGS. 10A through 10C are cross-sectional views illustrating a method of manufacturing a microfluidic device according to a third embodiment of the present invention.

Referring to FIG. 10A, the fourth substrate 310 having a planar surface, the polymer film 330 disposed on the fourth substrate 310, and a second sacrificing substrate 500 including a cavity 520 disposed on the polymer film 330 are prepared. The fourth substrate 310 and the polymer film 330 may be formed of polymer materials. For example, the fourth substrate 310 and the polymer film 330 may be formed of the same polymer material or different polymer materials. Alternatively, at least one of the fourth substrate 310 and the polymer film 330 may be surface-processed using at least one of ultraviolet (UV) light, ozone, plasma, and corona treatment. For example, a surface of the fourth substrate 310 contacting the polymer film 330 and a surface of the polymer film 330 contacting the fourth substrate 310 may be surface-processed. The second sacrificing substrate 500 may be formed of glass that is not bonded to polymer or of a polymer material. If the second sacrificing substrate 500 is formed of the polymer material, the second sacrificing substrate 500 and the polymer film 330 may be formed of different polymer materials. For example, the second sacrificing substrate 500 may be formed of a polymer material having a glass transition temperature higher than that of the polymer film 330.

As shown in FIG. 10B, pressure is applied to the fourth substrate 310 and the second sacrificing substrate 500 to which heat is applied toward the polymer film 330. For example, if the fourth substrate 310 and the polymer film 330 are formed of the same polymer material, the fourth substrate 310 and the polymer film 330 are bonded to each other according to polymer cross-linking by increasing the temperature to the glass transition temperature Tg.

Further, if the fourth substrate 310 and the polymer film 330 are formed of different polymer materials, surfaces of the fourth substrate 310 and the polymer film 330 may be surface-processed before the fourth substrate 310 and the polymer film 330 are bonded to each other. Then, the surface-processed fourth substrate 310 and the polymer film 330 are bonded to each other. For example, a surface of the fourth substrate 310 contacting the polymer film 330 and a surface of the polymer film 330 contacting the fourth substrate 310 may be surface-processed. In this case, a surface energy increases, and thus the surface-processed fourth substrate 310 and the polymer film 330 are bonded to each other at a temperature lower than the glass transition temperature Tg. In addition, although the fourth substrate 310 and the polymer film 330 are formed of the same polymer material, the fourth substrate 310 and the polymer film 330 may be surface-processed. In this case, the fourth substrate 310 and the polymer film 330 are bonded to each other at a temperature lower than the glass transition temperature Tg while their modifications may be minimized.

Meanwhile, during a process of bonding the fourth substrate 310 and the polymer film 330 each other, a part of the polymer film 330 disposed in the cavity 520 of the second sacrificing substrate 500 is modified to have a curvature curved toward the cavity 520 using a relatively small pressure. The fourth substrate 310 formed of the polymer material is slightly curved toward the cavity 520. Accordingly, the polymer film 330 is bonded in a concave shape with respect to the fourth substrate 310 in the cavity 520 and thus the polymer film 330 and the fourth substrate 310 integrally form the micro-flow path 320. The micro-flow path 320 is formed by bonding the fourth substrate 310 and the polymer film 330, thereby forming a smaller fluid flow path than a fluid flow path formed by forming a groove in the fourth substrate 310.

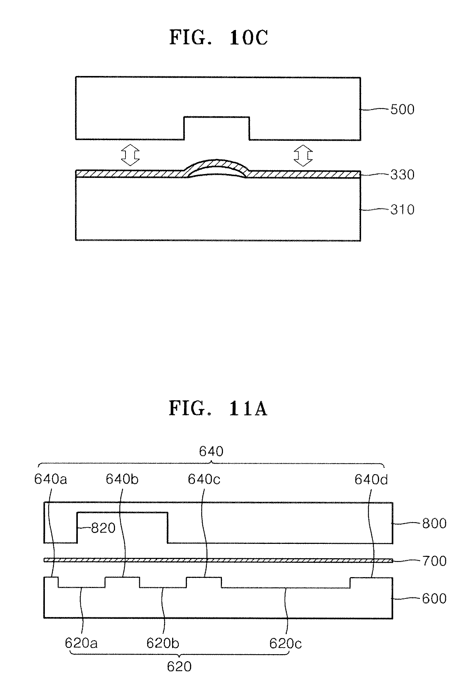

Further, the second sacrificing substrate 500 is formed of a material that is not bonded to polymer or is formed of a polymer material having a higher glass transition temperature than that of the polymer film 330, and thus the polymer film 330 and the second sacrificing substrate 500 are not bonded to each other. Thus, as shown in FIG. 10C, the second sacrificing substrate 500 is removed from the polymer film 330.

In addition, a polymer film and a substrate that are formed of polymer materials may be used to simultaneously manufacture various elements of the microfluidic device.

FIGS. 11A through 11C are cross-sectional views illustrating a method of simultaneously manufacturing a micro-valve and a micro-chamber of a microfluidic device according to an embodiment of the present invention. Referring to FIG. 11A, a fifth substrate 600 including a plurality of first through third grooves 620a, 620b, and 620c spaced apart from each other, a polymer film 700 disposed on the fifth substrate 600, and a third sacrificing substrate 800 including a cavity 820 disposed on the polymer film 700 are prepared. Although the first through third grooves 620a, 620b, and 620c are disconnected from each other in FIG. 11A, the second and third grooves 620b and 620c may be connected to each other through another groove. The fifth substrate 600 and the polymer film 700 may be formed of polymer materials. For example, the fifth substrate 600 and the polymer film 700 may be formed of the same polymer material or different polymer materials. Alternatively, at least one of the fifth substrate 600 and the polymer film 700 may be surface-processed using at least one of ultraviolet (UV) light, ozone, plasma, and corona treatment. For example, a surface of the fifth substrate 600 contacting the polymer film 700 and a surface of the polymer film 700 contacting the fifth substrate 600 may be surface-processed. The third sacrificing substrate 800 may be formed of glass that is not bonded to polymer or of a polymer material. If the third sacrificing substrate 800 is formed of the polymer material, the third sacrificing substrate 800 and the polymer film 700 may be formed of different polymer materials. For example, the third sacrificing substrate 800 may be formed of a polymer material having a glass transition temperature higher than that of the polymer film 700.

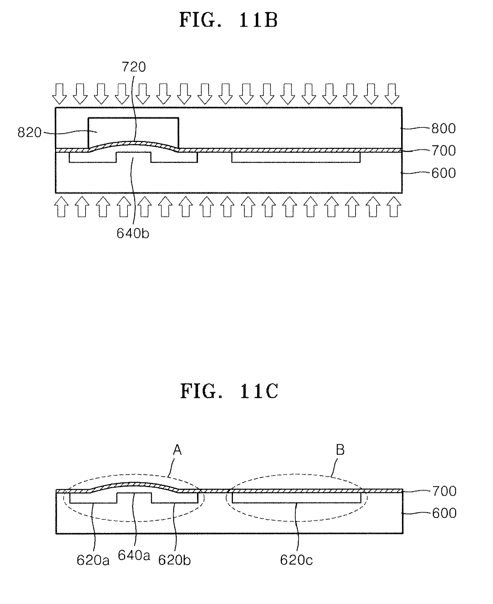

As shown in FIG. 11B, pressure is applied to the fifth substrate 600 and the third sacrificing substrate 800 to which heat is applied toward the polymer film 700. For example, if the fifth substrate 600 and the polymer film 700 are formed of the same polymer material, the fifth substrate 600 and the polymer film 700 are bonded to each other according to polymer cross-linking by increasing the temperature to the glass transition temperature Tg. Further, if the fifth substrate 600 and the polymer film 700 are formed of different polymer materials, surfaces of the fifth substrate 600 and the polymer film 700 may be surface-processed before the fifth substrate 600 and the polymer film 700 are bonded to each other. Then, the surface-processed fifth substrate 600 and the polymer film 700 are bonded to each other. For example, a surface of the fifth substrate 600 contacting the polymer film 700 and a surface of the polymer film 700 contacting the fifth substrate 600 may be surface-processed. In this case, a surface energy increases, and thus the surface-processed fifth substrate 600 are bonded to each other are bonded to each other at a temperature lower than the glass transition temperature Tg. In addition, although the fifth substrate 600 and the polymer film 700 are formed of the same polymer material, the fifth substrate 600 and the polymer film 700 may be surface-processed. In this case, the fifth substrate 600 and the polymer film 700 are bonded to each other at a temperature lower than the glass transition temperature Tg while their modifications may be minimized.

Meanwhile, an elastic film 720 of the polymer film 700 disposed in the cavity 820 of the third sacrificing substrate 800 is modified to have a curvature curved toward the cavity 820 using a relatively small pressure. Thus, a surface 640b of the fifth substrate 600 corresponding to the cavity 820 is spaced apart from the polymer film 700. Further, the third sacrificing substrate 800 is formed of a material that is not bonded to polymer or is formed of a polymer material having a higher glass transition temperature than that of the polymer film 700, and thus the polymer film 700 and the third sacrificing substrate 800 are not bonded to each other. Thus, as shown in FIG. 11C, the third sacrificing substrate 800 is removed from the polymer film 700. Then, in the fifth substrate 600, the two grooves 620a and 620b and the polymer film 700 form a micro-valve A, and the other groove 720c and the polymer film 700 form a micro-chamber B. A sample that passes through the micro-valve A may be input into the micro-chamber B through a micro-flow path (not shown). As described above, if a microfluidic device is manufactured by bonding a polymer film and a substrate that are formed of polymer materials in a thermal fusing manner, elements of the microfluidic device may be more easily manufactured. The elements of the microfluidic device may also be more easily manufactured through one manufacturing process.

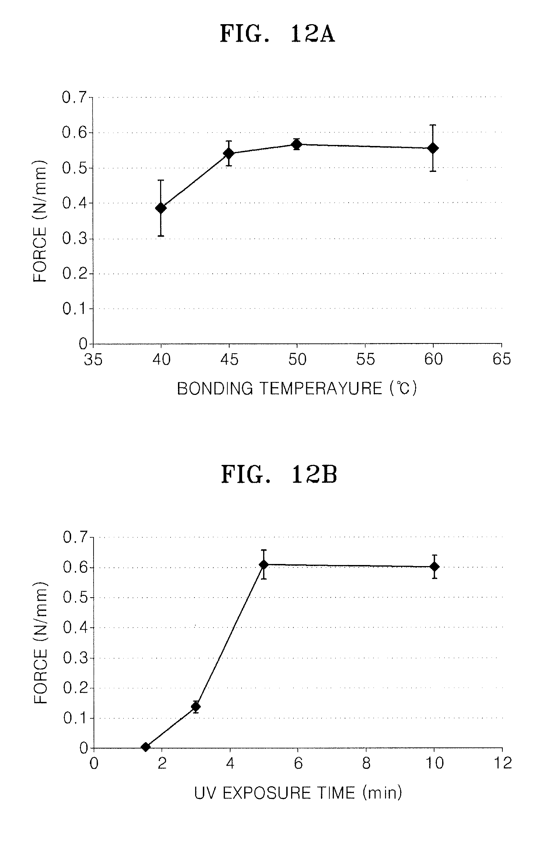

FIGS. 12A and 12B are graphs of an experiment result indicating bonding intensity when Polypropylene (PP) and Poly Methyl Methacrylate (PMMA) that are surface-processed using ultraviolet (UV) light are bonded to each other in a thermal fusing manner according to an embodiment of the present invention.

Referring to FIG. 12A, the graph shows that the higher the bonding temperature, the greater the bonding intensity. Also, referring to FIG. 12B, the graph shows that the longer the surface-processing time using UV light, the greater the bonding intensity. Based on this result, bonding is performed using optimized bonding temperature and surface-processing time, thereby minimizing a modification due to thermal fusing and implementing great bonding intensity.

A micro-valve of the microfluidic device described above is usually spaced apart from a valve seat since a polymer film contacting the valve seat has a curvature, thereby preventing the polymer film and the valve seat from being fixed to each other. Thus, reliability and reproducibility of an operation of the micro-valve may be achieved. A micro-flow path may be formed using the polymer film, thereby manufacturing a small-sized micro-flow path.

A bonding agent is not used, and costly processes like coating a substrate are not necessary. Thereby manufacturing a polymer microfluidic device that performs various functions to control a micro-fluid at a low price is achieved.

In addition, various elements of the microfluidic device may be simultaneously manufactured.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.
The disclosure discloses the following further aspects counted from 1 and listed below. The first aspect of a microfluidic device comprising: a first substrate having a micro-flow path and a valve seat protruding toward the micro-flow path; a second substrate facing the first substrate and having a cavity corresponding to the valve seat; and a polymer film disposed between the first substrate and the second substrate and comprising a bonding unit bonded to the first and second substrates, and a variable unit having a variable shape according to pneumatic pressure provided to the cavity, wherein the variable unit has a curvature and is spaced apart from the valve seat when pneumatic pressure is not provided to the variable unit.
The microfluidic device according to the first aspect, wherein the variable unit is concave with respect to the valve seat.
The microfluidic device according to the first aspect, wherein the variable unit contacts the valve seat when pneumatic pressure is provided to the variable unit.
The microfluidic device according to the first aspect, wherein the first substrate and the second substrate are polymers.
The microfluidic device according to the fourth aspect, wherein the polymers comprise at least one selected from the group consisting of polypropylene (PP), polyethylene (PE), high density polyethylene (HDPE), thermoplastic elastomer (TPE), elastic polymer, fluoropolymer, poly methyl methacrylate (PMMA), polystyrene (PS), polycarbonate (PC), cyclic olefin copolymer (COC), polyethylene terephthalate (PET), polyvinyl chloride (PVC), acrylonitrile butadiene styrene (ABS), and polyurethane (PUR). The microfluidic device according to the fourth aspect, wherein the first substrate, the second substrate, and the polymer film are the same type of polymer.
The microfluidic device according to the fourth aspect, wherein at least two of the first substrate, the second substrate, and the polymer film are different types of polymers. The microfluidic device according to the first aspect, wherein at least one of a surface of the first substrate contacting the polymer film, a surface of the second substrate contacting the polymer film, a surface of the polymer film contacting the first substrate, and a surface of the polymer film contacting the second substrate is surface-processed by at least one of ultraviolet (UV) light, ozone, plasma, and corona treatment.
The ninth aspect of a microfluidic device comprising: a substrate having a micro-flow path and a valve seat protruding into the micro-flow path; and a polymer film disposed on a surface of the substrate and comprising a bonding unit bonded to the substrate and a variable unit having a variable shape according to pressure, wherein the variable unit has a curvature and is spaced apart from the valve seat when pressure is not provided to the variable unit.
The microfluidic device according to the ninth aspect, wherein the substrate comprises: a first sub substrate having a micro-flow path and a first valve seat protruding toward the micro-flow path; a second sub substrate disposed on the first sub substrate and having a first hole, a second hole, and a second valve seat that is disposed in a region corresponding to the first valve seat.
The microfluidic device according to the ninth aspect, wherein the surface of the substrate is planar.
The microfluidic device according to the ninth aspect, wherein the variable unit is concave with respect to the valve seat.
The microfluidic according to the ninth aspect, wherein the variable unit contacts the valve seat when pressure is provided to the variable unit.
The microfluidic device according to the ninth aspect, wherein the substrate is a polymer. The microfluidic device according to the ninth aspect, wherein at least one of a surface of the substrate contacting the polymer film, and a surface of the polymer film contacting the substrate is surface-processed using at least one of ultraviolet (UV) light, ozone, plasma, and corona treatment.
The sixteenth aspect of a method of manufacturing a microfluidic device, the method comprising: providing a first substrate including a micro-flow path and a valve seat protruding toward the micro-flow path; providing a second substrate including a cavity corresponding to the valve seat; disposing a polymer film between the first substrate and the second substrate; and bonding the first substrate, the second substrate, and the polymer film by applying pressure and heat thereto, wherein a part of the polymer film has a curvature.
The method according to the sixteenth aspect, wherein a part of the polymer film is modified during bonding to provide the curvature.
The method according to the sixteenth aspect, wherein the part of the polymer film is disposed in the cavity.
The method according to the sixteenth aspect, wherein the curvature of the polymer film is concave with respect to the valve seat.
The method according to the sixteenth aspect, wherein the first substrate and the second substrate each comprise a polymer material.
The method according to the sixteenth aspect, wherein a surface of at least one of the first substrate, the second substrate, or the polymer film comprises a surface that has been processed using at least one of ultraviolet (UV) light, ozone, plasma, and corona treatment.
The twenty-second aspect of a method of manufacturing a microfluidic device, the method comprising: providing a substrate having a planar surface; providing a sacrificing substrate including a cavity; disposing a polymer film between the substrate and the sacrificing substrate; and bonding the substrate, the sacrificing substrate, and the polymer film by applying pressure and heat thereto, wherein a part of the polymer film has a curvature.
The method according to the twenty-second aspect, wherein a part of the polymer film is modified during bonding to provide the curvature.
The method according to the twenty-second aspect, wherein the curvature of the polymer film is about 10 µm or less from the valve seat.
The twenty-fifth aspect of a microfluidic device comprising a substrate; and a polymer film comprising a bonding unit bonded to a top surface of the substrate and a flow path unit spaced apart from the substrate and forming a micro-flow path, wherein the flow path unit has a concave shape with respect to the substrate.
The microfluidic device according to the twenty-fifth aspect, wherein the center of the flow path unit is about 10 µm or less from the top surface of the substrate.

## Claims

1. A microfluidic device comprising:
a first substrate having a micro-flow path and a valve seat protruding toward the micro-flow path;
a second substrate facing the first substrate and having a cavity corresponding to the valve seat; and
a polymer film disposed between the first substrate and the second substrate and comprising a bonding unit bonded to the first and second substrates, and a variable unit having a variable shape according to pneumatic pressure provided to the cavity, or
a polymer film disposed on a surface of a substrate and comprising a bonding unit bonded to the substrate and a variable unit having a variable shape according to pressure, wherein the substrate comprises the first substrate and the second substrate;
wherein the variable unit has a curvature and is spaced apart from the valve seat when pneumatic pressure is not provided to the variable unit.

2. The microfluidic device of claim 1, wherein the variable unit is concave with respect to the valve seat.

3. The microfluidic device of claim 1 or 2, wherein the variable unit contacts the valve seat when pneumatic pressure is provided to the variable unit.

4. The microfluidic device of any one of claims 1-3, wherein the first substrate and the second substrate are polymers.

5. The microfluidic device of claim 4, wherein the polymers comprise at least one selected from the group consisting of polypropylene (PP), polyethylene (PE), high density polyethylene (HDPE), thermoplastic elastomer (TPE), elastic polymer, fluoropolymer, poly methyl methacrylate (PMMA), polystyrene (PS), polycarbonate (PC), cyclic olefin copolymer (COC), polyethylene terephthalate (PET), polyvinyl chloride (PVC), acrylonitrile butadiene styrene (ABS), and polyurethane (PUR).

6. The microfluidic device of claim 4, wherein the first substrate, the second substrate, and the polymer film are the same type of polymer.

7. The microfluidic device of claim 4, wherein at least two of the first substrate, the second substrate, and the polymer film are different types of polymers.

8. The microfluidic device of any one of claim 1-7, wherein at least one of a surface of the first substrate contacting the polymer film, a surface of the second substrate contacting the polymer film, a surface of the polymer film contacting the first substrate, and a surface of the polymer film contacting the second substrate is surface-processed by at least one of ultraviolet (UV) light, ozone, plasma, and corona treatment.

9. A method of manufacturing a microfluidic device, the method comprising:
providing a first substrate including a micro-flow path and a valve seat protruding toward the micro-flow path;
providing a second substrate including a cavity corresponding to the valve seat;
disposing a polymer film between the first substrate and the second substrate; and
bonding the first substrate, the second substrate, and the polymer film by applying pressure and heat thereto, wherein a part of the polymer film has a curvature.

10. The method of claim 9, wherein a part of the polymer film is modified during bonding to provide the curvature.

11. The method of claim 9 or 10, wherein the part of the polymer film is disposed in the cavity.

12. The method of any one of claims 9-11, wherein the curvature of the polymer film is concave with respect to the valve seat.

13. The method of any one of claims 9-12, wherein the first substrate and the second substrate each comprise a polymer material.

14. The method of any one of claims 9-13, wherein a surface of at least one of the first substrate, the second substrate, or the polymer film comprises a surface that has been processed using at least one of ultraviolet (UV) light, ozone, plasma, and corona treatment.
